# EUROPEAN PATENT APPLICATION

(11) **EP 4 640 560 A1**
(43) Date of publication of application: **29.10.2025**
(21) Application number: 23909403.0
(22) Date of filing: 26.09.2023
(51) Int. Cl.: B64D 27/24

(54) **HIGHLY INTEGRATED COMBINED POWER MODULE AND AIRCRAFT**

(30) Priority: 25.12.2022 CN 202223467018 U; 28.07.2023 CN 202310937199
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121418
(87) International publication number: WO 2024/139468

(57) **Abstract**

The present invention belongs to the technical field of aircraft, and discloses a highly integrated combined power module and an aircraft, comprising a motor module, an ESC module, and a fixing structure. Wherein the ESC module is fixably arranged below the motor module to form a matching relationship; the fixing structure is annularly arranged on the outer side of the motor module and fixedly connectable to the drone arm. The fixing structure comprises a barrel body and an extension part, the extension part is connected to the barrel body and located above the barrel body, and the extension part extends radially outward from the end above the barrel body. The highly integrated combined power module in the present invention can reduce damage to the complete structure of the aircraft, form an independent module, and is convenient for production and cost reduction.

## Description

### FIELD OF THE DISCLOSURE

The present invention relates to the field of aircraft, and specifically, relates to a highly integrated combined power module and an aircraft.

### BACKGROUND OF THE INVENTION

On an aircraft, in order to reduce take-off weight and consider the flow resistance of the entire aircraft during flight, the installation space provided for the power system is very limited. Especially for vertical take-off and landing aircraft, more or larger power devices are needed, which will affect the structural integrity of the entire aircraft, causing certain safety hazards. A highly integrated combined power module will reduce damage to the complete structure of the aircraft, form an independent module, and is convenient for production and cost reduction. Therefore, there is an urgent need to design a highly integrated combined power module that adapts to the installation space of the aircraft.

### SUMMARY OF THE INVENTION

The purpose of the present invention is to provide a highly integrated combined power module, which has a simple structure and can achieve the purpose of reducing the weight of the aircraft arm and of improving the stability of the motor fixing structure.

To achieve this purpose, the present invention adopts the following technical solution:
The present invention provides a highly integrated combined power module, comprising:
a motor module;
an ESC module, wherein the ESC module is fixably arranged below the motor module and controls the motor module;
a fixing structure, wherein the fixing structure is sleeved on an outer side of the motor module, and the motor module and the ESC module are fixedly connectable to an aircraft arm through the fixing structure;
the fixing structure comprises a barrel body and an extension part, the extension part is connected to the barrel body and located above the barrel body, the extension part extends radially outward from a junction with the barrel body along a radial direction of the barrel body.

Preferably, a plurality of uniformly spaced through holes is provided on the extension part for connecting to the drone arm.

Preferably, the number of the through holes 430 is 48, and a diameter is between 4.8mm and 5.2mm.

Preferably, a plurality of lightening holes is opened on a side surface of the barrel body.

Preferably, a plurality of reinforcing ribs is fixedly arranged on an outer side surface of the barrel body.

Preferably, it further comprises a connecting piece, one end of the connecting piece passes through the motor module, and the other end passes through the ESC module, so that the motor module and the ESC module are fixedly connectable to form a matching relationship.

Preferably, the motor module comprises a bracket, the bracket comprises a plurality of bracket legs radially extending from a central axis of the bracket, the plurality of bracket legs has a plurality of threaded holes, and one end of the connecting piece is connectable to the plurality of threaded holes.

Preferably, a plurality of through holes is opened on the ESC module, one end of the connecting piece away from the plurality of threaded holes is connectable to the ESC module through the plurality of through holes to connect the motor module and the ESC module in series, and the number of the plurality of through holes is eight.

Preferably, it further comprises a damping pad, the damping pad is located between the motor module and the ESC module, providing a damping function for the motor module during operation.

The present invention further provides an aircraft, characterized in that, the aircraft further comprises the highly integrated combined power module as described in the above solution, and the highly integrated combined power module is connected to the arm of the aircraft by utilizing the fixing structure.

The beneficial effects of the present invention are as follows: The highly integrated combined power module in the present invention can reduce damage to the complete structure of the aircraft, form an independent module, and is convenient for production and cost reduction. Modular production of the motor and ESC in the present invention and then modular assembly into a highly integrated combined power module can achieve the purpose of improving production efficiency and reducing costs. In addition, by fixing it to the aircraft arm through the fixing structure, it can form a consolidated assembly to increase strength, the force distribution is more uniform, and it can also conduct part of the heat from the bearing sleeve to the arm to increase heat dissipation.

### BRIEF DESCRIPTION OF DRAWINGS

FIG. 1 is a schematic diagram of the highly integrated combined power module of the present invention;

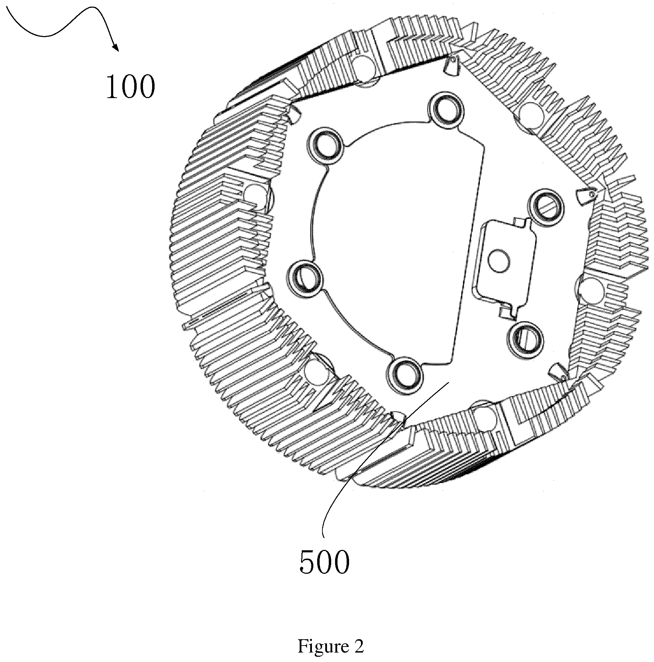

FIG. 2 is a schematic diagram of the motor module of the present invention;

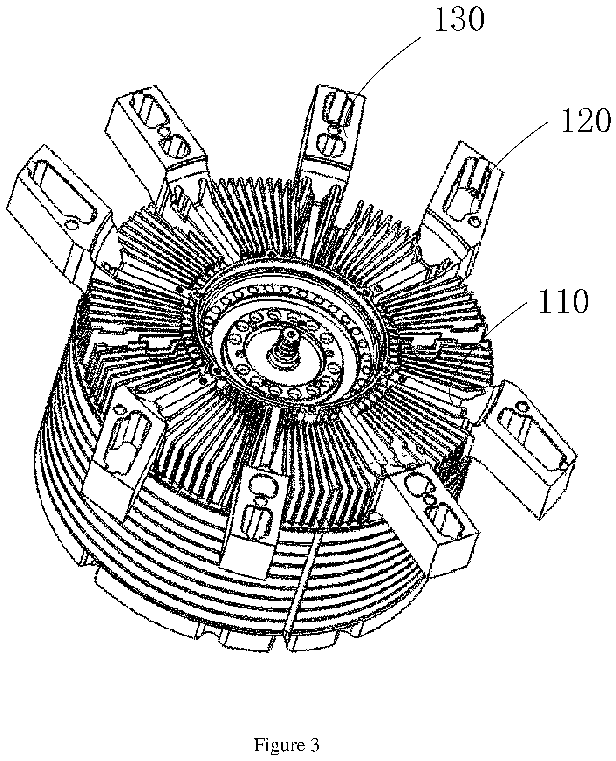

FIG. 3 is a schematic diagram of the bracket of the motor module of the present invention;

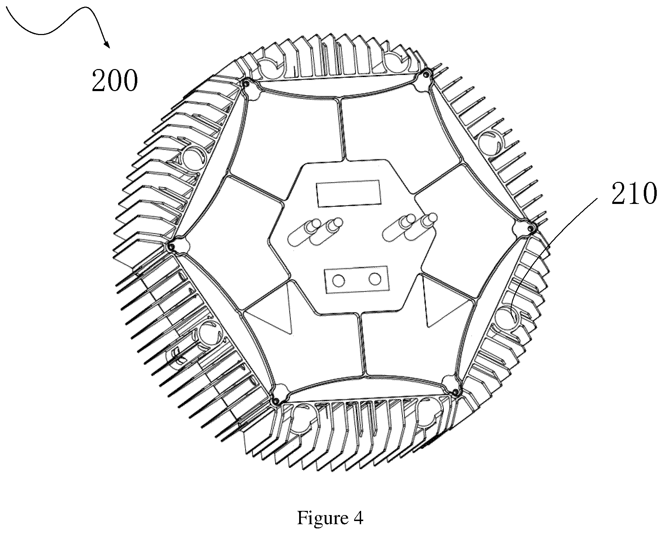

FIG. 4 is a schematic diagram of the ESC module of the present invention;

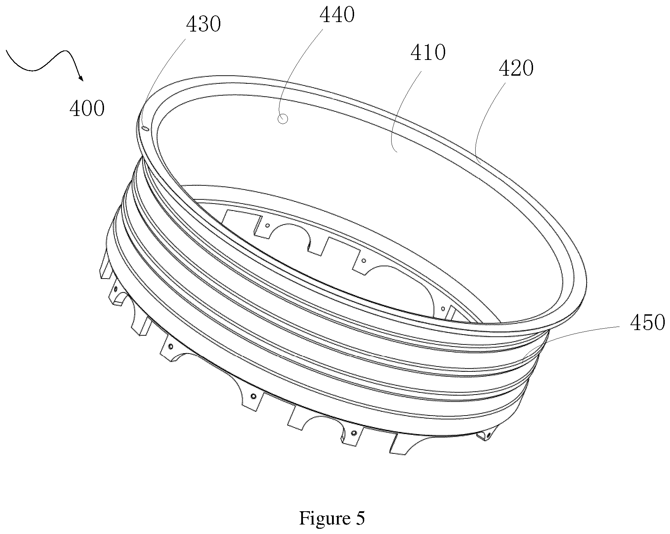

FIG. 5 is a schematic diagram of the fixing structure of the present invention.

### DETAILED DESCRIPTION

To clarify the objectives, technical solutions, and advantages of the present invention, various embodiments of the invention will be described in detail below with reference to the accompanying drawings. However, those of ordinary skill in the art will appreciate that numerous technical details are set forth in the embodiments to provide a better understanding of the present invention. Nevertheless, the technical solutions claimed in the claims of the present invention may be implemented even without these technical details and without various modifications and variations based on the following embodiments.

Unless the context dictates otherwise, the words "comprise", "include", and variations thereof such as "comprising", "including", and "having" throughout the specification and claims shall be interpreted in an open, inclusive sense, i.e. as "including but not limited to".

The embodiments of the invention will be described in detail below with reference to the drawings for clearer understanding of its objectives, features, and advantages. It should be understood that the embodiments illustrated in the drawings do not limit the scope of the invention but are intended to explain the substantive content of its technical solutions.

References throughout the specification to "one embodiment" or "an embodiment" mean that a specific feature, structure, or characteristic described in connection with the embodiment is included in at least one embodiment. Thus, appearances of "in one embodiment" or "in an embodiment" in various places throughout the specification are not necessarily all referring to the same embodiment. Furthermore, specific features, structures, or characteristics may be combined in any suitable manner in one or more embodiments.

The singular forms "a", "an", and "the" as used in the specification and appended claims include plural referents unless the context clearly dictates otherwise. It should be noted that the term "or" is generally used in its inclusive sense meaning "and/or" unless the context clearly dictates otherwise.

In the following description, directional terms such as "front", "rear", "left", "right", "outer", "inner", "outward", "inward", "up", and "down" are used for clarity in illustrating the structure and operation of the invention. These terms should be understood as convenient expressions rather than limiting terms.

The first embodiment of the present application provides a highly integrated combined power module.

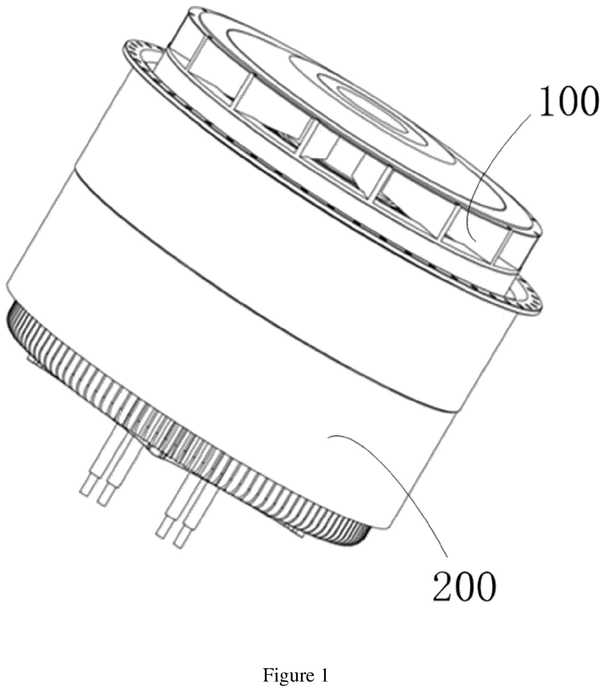

As shown in FIG. 1, the highly integrated combined power module in this embodiment specifically comprises a motor module 100, an ESC module 200, and a fixing structure 400. Wherein the ESC module 200 is fixably arranged below the motor module 100 and controls the motor module 100. The fixing structure 400 is sleeved on the outer side of the motor module 100, and the motor module 100 and the ESC module 200 are fixedly connectable to the aircraft arm through the fixing structure 400. The fixing structure 400 comprises a barrel body 410 and an extension part 420, the extension part 420 is connected to the barrel body 410 and located above the barrel body 410, the extension part 420 extends radially outward from the junction with the barrel body 410 along the radial direction of the barrel body 410.

Further, a plurality of uniformly spaced through holes 430 is provided on the extension part 420 for connecting to the drone arm. Preferably, the number of the through holes 430 is 48, and the diameter is between 4.8mm and 5.2mm.

Further still, a plurality of lightening holes 440 is opened on the side surface of the barrel body 410 for weight reduction. A plurality of reinforcing ribs 450 is fixedly arranged on the outer side surface of the barrel body 410 for increasing the load-bearing capacity of the barrel body 410.

It is worth noting that the highly integrated combined power module of the present application further comprises a connecting piece. One end of the connecting piece passes through the motor module 100, and the other end passes through the ESC module 200, so that the motor module 100 and the ESC module 200 are fixedly connectable to form a matching relationship.

Specifically, the motor module 100 comprises a bracket 110. The bracket 110 comprises a plurality of bracket legs 130 radially extending from the central axis of the bracket 110. The plurality of bracket legs 130 has a plurality of threaded holes 120. One end of the connecting piece is connectable to the plurality of threaded holes 120. On the ESC module 200, a plurality of through holes 210 is opened. The end of the connecting piece away from the plurality of threaded holes 110 is connectable to the ESC module 200 through the plurality of through holes 210 to connect the motor module 100 and the ESC module 200 in series. Preferably, the number of the plurality of through holes 210 is 8.

Of course, in the highly integrated combined power module provided in this embodiment, a damping pad 500 is further comprised. The damping pad 500 is located between the motor module 100 and the ESC module 200, providing a damping function for the motor module during operation, and providing cushioning protection for the surfaces where the motor module 100 and the ESC module 200 contact. Preferably, the cross-sectional shape of the damping pad 500 is hexagonal, facilitating the arrangement of power devices such as IGBT devices at the edges of the hexagonal damping pad 500.

It is worth noting that the motor module 100 of the present application further comprises a plurality of terminal posts. The ESC module 200 comprises a plurality of sockets. The plurality of terminal posts and the plurality of sockets are configured to correspond one-to-one to realize the electrical connection between the motor module 100 and the ESC module 200.

Preferably, the cross-sections of the motor module 100 and the ESC module 200 in the axial direction are both circular. The cylindrical structure of the motor module 100 and of the ESC module 200 facilitates their installation inside the aircraft.

Traditionally, the fixing method for fixing the motor to the drone arm is to fix it at the ESC part below the motor. In the present invention, by redesigning the installation structure of the motor body, changing the fixing position from below the motor to the fixing position of the 48 small holes above the motor, the "inverted installation" fixing method of the motor is realized. At the same time, because the fixing member 400 and the bearing sleeve of the motor adopt a welded fixing method and are combined with the upper mounting holes of the arm to form an integral structure, the reliability of the connection can be increased, completely solving the fatigue strength problem.

The second embodiment of the present application provides an aircraft. The aircraft further comprises the highly integrated combined power module as described in the above solution, and the highly integrated combined power module is connected to the arm of the aircraft by utilizing the fixing structure 400.

The highly integrated combined power module in the present invention can reduce damage to the complete structure of the aircraft, form an independent module, and is convenient for production and cost reduction. Modular production of the motor and ESC in the present invention and then modular assembly into a highly integrated combined power module can achieve the purpose of improving production efficiency and reducing costs. In addition, by fixing it to the drone arm through the fixing structure 400, it can form a consolidated assembly to increase strength, the force distribution is more uniform, and it can also conduct part of the heat from the bearing sleeve to the arm to increase heat dissipation.

The foregoing embodiments merely exemplify the principles and efficacy of the present invention and are not intended to limit its scope. Any person skilled in the art may modify or alter these embodiments without departing from the intended purpose of the present invention. Therefore, all equivalent modifications or alterations made by those with ordinary skill in the art without departing from the spirit disclosed herein shall remain covered by the claims of the present invention.

## Claims

1. A highly integrated combined power module, comprising:
a motor module;
an ESC module, wherein the ESC module is fixably arranged below the motor module and controls the motor module;
a fixing structure, wherein the fixing structure is sleeved on an outer side of the motor module, and the motor module and the ESC module are fixedly connectable to an aircraft arm through the fixing structure;
the fixing structure comprises a barrel body and an extension part, the extension part is connected to the barrel body and located above the barrel body, the extension part extends radially outward from a junction with the barrel body along a radial direction of the barrel body.

2. The highly integrated combined power module according to claim 1, **characterized in that**, a plurality of uniformly spaced through holes is provided on the extension part for connecting to the drone arm.

3. The highly integrated combined power module according to claim 2, **characterized in that**, the number of the through holes is 48, and a diameter is between 4.8mm and 5.2mm.

4. The highly integrated combined power module according to claim 1, **characterized in that**, a plurality of lightening holes is opened on a side surface of the barrel body.

5. The highly integrated combined power module according to claim 1, **characterized in that**, a plurality of reinforcing ribs is fixedly arranged on an outer side surface of the barrel body.

6. The highly integrated combined power module according to claim 1, further comprising a connecting piece, wherein one end of the connecting piece passes through the motor module, and the other end passes through the ESC module, so that the motor module and the ESC module are fixedly connectable to form a matching relationship.

7. The highly integrated combined power module according to claim 6, **characterized in that**, the motor module comprises a bracket, the bracket comprises a plurality of bracket legs radially extending from a central axis of the bracket, the plurality of bracket legs has a plurality of threaded holes, and one end of the connecting piece is connectable to the plurality of threaded holes.

8. The highly integrated combined power module according to claim 7, **characterized in that**, a plurality of through holes is opened on the ESC module, one end of the connecting piece away from the plurality of threaded holes is connectable to the ESC module through the plurality of through holes to connect the motor module and the ESC module in series, and the number of the plurality of through holes is eight.

9. The highly integrated combined power module according to claim 1, further comprising a damping pad, the damping pad is located between the motor module and the ESC module, providing a damping function for the motor module during operation.

10. An aircraft, **characterized in that**, the aircraft further comprises the highly integrated combined power module according to any one of claims 1 to 9, and the highly integrated combined power module is connected to the arm of the aircraft by utilizing the fixing structure.
